# EUROPÄISCHE PATENTANMELDUNG

(11) **EP 1 189 019 A1**
(43) Veröffentlichungstag der Anmeldung: **20.03.2002**
(21) Anmeldenummer: 01118091.6
(22) Anmeldetag: 26.07.2001
(51) Int. Cl.: G01B 17/00, G01B 17/06, G01B 21/12

(54) **Werkstückerfassung in Fertigungsanlagen**

(30) Priorität: 01.09.2000 DE 10043036
(71) Anmelder: Zehnder Verkaufs- und Verwaltungs AG, 5722 Gränichen (CH)
(72) Erfinder: Roth, Hubert, 77794 Lautenbach (DE); Keller, Ulrich, 77933 Lahr (DE)
(74) Vertreter: Stenger, Watzke & Ring Patentanwälte

(57) **Zusammenfassung**

Die vorliegende Erfindung betrifft ein Verfahren und eine Vorrichtung zum Erfassen eines im wesentlichen automatisch in einer Bearbeitungs-/Fertigungsanlage (10) transportierten Werkstücks (12) mittels einer Sensoranordnung (14). Hiermit kann möglichst unabhängig vom Werkstück das Erreichen einer Position genau ermittelt werden und es können dynamische Bewegungen eines Werkstückes sowie Form und Geometrie von Werkstücken erkannt werden. Mit dem Verfahren und der Vorrichtung sind bestehende Bearbeitungs-/Fertigungsanlagen einfach und kostengünstig nachrüstbar. Es wird vorgeschlagen, daß als Sensoranordnung (14) eine Ultraschall-Sensoranordnung verwendet wird.

## Beschreibung

Die Erfindung betrifft ein Verfahren und eine Vorrichtung zum Erfassen beispielsweise des Erreichens einer Position eines im wesentlichen automatisch in einer Bearbeitungs- / Fertigungsanlage transportierten Werkstücks mittels einer Sensoranordnung.

In einer Bearbeitungs- / Fertigungsanlage werden Werkstücke größtenteils automatisch zu einem Halbfabrikat oder zu einem fertigen Produkt bearbeitet. Die Anlage besteht dazu aus zumindest einer Bearbeitungsstelle, zu der automatisch oder manuell ein Werkstück transportiert wird. Erreicht das Werkstück eine vorgegebene Position wird eine Bearbeitung ausgeführt und nach deren Abschluß das Werkstück weitertransportiert. Oft wird bei Erreichen der vorgegebenen Position die Bearbeitung automatisch gestartet. Dazu wird insbesondere mittels einer Lichtschranke das Erreichen der vorgegebenen Position ermittelt und eine Steuerung beginnt die Ausführung der Bearbeitung.

Mit den bekannten Positionssensoren wird eine Position in einem räumlich sehr beschränkten Bereich bestimmt, beispielsweise im Durchmesser eines Lichtstrahls. Insbesondere bei Bearbeitung von sehr unterschiedlichen mechanisch geformten und räumlich ausgedehnten Werkstücken wie beispielsweise Heizkörper, Bleche für die Automobilindustrie, Möbelstücke, usw. ist hier mit nur einem Positionssensor eine genaue Erfassung des Erreichens der Position, bei der ein Bearbeitungsschritt gestartet werden soll, nicht möglich.

Dies ist jedoch insbesondere bei Anlagen erforderlich, bei denen das Werkstück während der Bearbeitung kontinuierlich an der Bearbeitungsstelle vorbeigeführt wird, wie zum Beispiel bei einer Lackieranlage. Üblicherweise ist der die Bearbeitung ausführende Anlagenteil nur dann in Betrieb, wenn ein geeignetes Werkstück an entsprechender Stelle vorliegt. In Abhängigkeit von der Form und der Ausrichtung des Werkstücks kann die über die Lichtschranke ermittelte Position zum Starten des Lackierens des Werkstücks beispielsweise dadurch nicht genau festgestellt werden, daß bei Erreichen der Meßstelle durch das Werkstück ein Teil des Werkstücks auf einer von der Höhe der Meßstelle verschiedenen Höhe die Meßstelle bereits passiert hat, weshalb das Werkstück nur unzureichend lackiert wird. Dies führt insbesondere bei Verarbeitung sehr unterschiedlicher, aufeinanderfolgender Werkstücke zu Mängeln in der Form, daß Werkstücke nicht vollständig oder korrekt lackiert werden.

Herkömmliche in Fertigungsanlagen üblicherweise verwendete Lichtschrankensysteme sind darüber hinaus nicht geeignet, Form und Geometrie von Werkstücken oder dynamische Werkstückbewegungen zu erkennen, beispielsweise an Pendeln abgehängter Werkstücke oder dergleichen.

Es ist daher **Aufgabe** der vorliegenden Erfindung, ein Verfahren zu schaffen, mit dem möglichst unabhängig vom Werkstück das Erreichen einer Position genau ermittelt werden kann, dynamische Bewegungen eines Werkstückes sowie Form und Geometrie von Werkstücken erkannt werden können, wobei das Verfahren einfach und kostengünstig in bestehenden Bearbeitungs- / Fertigungsanlagen nachrüstbar sein soll.

Zur **Lösung** der Aufgabe wird vorgeschlagen, daß als Sensoranordnung eine Ultraschall-Sensoranordnung verwendet wird. Die Verwendung von Ultraschall-Sensoranordnung als Meßmittel kann gegenüber konventionellen Meßmitteln wie beispielsweise Lichtschranken vorteilhaft eine Möglichkeit bieten, eine genaue Position eines Werkstücks in einem räumlichen Bereich unabhängig von der Form und den Abmessungen des Werkstücks zu ermitteln. So kann beispielsweise die Position von unterschiedlichen aufeinander folgenden Werkstücken mit einer einzigen Sensoranordnung genau bestimmt werden, wodurch beispielsweise in einer Lackieranlage eine vollständige Lackierung des jeweiligen Werkstücks erreicht werden kann. Eine Mehrfachanordnung von selektiv wirkenden Sensoren wie Lichtschranken sowie der hierzu erforderliche Aufwand zum Auswerten kann eingespart werden. Nach dem erfindungsgemäßen Verfahren ist es auch möglich, zerklüftete Werkstücke bzw. geometrisch völlig unterschiedliche Oberflächen zu erkennen. So sind gewölbte, gerundete, austragende oder ausgehöhlte Formen erkennbar. Dadurch wird es ermöglicht, nicht nur hinsichtlich der Positionierung sondern auch produktbezogen eine Fertigung zu steuern, d. h. es können unterschiedliche Produkte in wahlloser Reihenfolge individuell bearbeitet werden.

Dabei kann die Sensoranordnung einen Ultraschallgeber in Transportrichtung des Werkstücks auf einer Seite des Bearbeitungsanlagenteils aufweisen und auf einer gegenüberliegenden Seite zumindest einen Ultraschallempfänger. Ein zwischen Ultraschallgeber und -empfänger einfahrendes Werkstück kann eine Verringerung des empfangenen Signals bewirken, woraus das Erreichen einer Position ermittelt wird. Daneben kann auch vom Werkstück reflektierter Ultraschall empfangen werden, um aus dem empfangenen Signal die Position zu ermitteln. Zur Erfassung eines möglichst großen Raumbereichs können zudem mehrere Ultraschallempfänger eingesetzt werden. Ferner können erforderlichenfalls auch mehrere Ultraschallgeber verwendet werden, um beispielsweise einen besonders ungünstigen Raumbereich zu überwachen.

Ferner wird vorgeschlagen, daß Signale der Sensoranordnung zur Ermittlung der Position oder des Erreichens der Position des Werkstücks an einen Rechner übermittelt werden. Der Rechner kann vorteilhaft aus den Signalen des Empfängers das Erreichen der genauen Position des Werkstücks ermitteln und beispielsweise entsprechende Steuerbefehle an weitere Anlagenteile zum Ausführen einer Bearbeitung aussenden. Ferner kann eine räumliche Stellung des Werkstücks ermittelt werden, um bestimmte Bearbeitungsschritte zu steuern wie beispielsweise ein Verschließen einer Öffnung eines Heizkörpers mit einer Verschlußschraube.

Vorteilhaft wird die Sensoranordnung höheneinstellbar betrieben. Damit kann die Sensoranordnung optimal auf die zu verarbeitenden Werkstücke ausgerichtet werden. Ein starkes Auswertesignal kann erreicht werden, wodurch eine einfache kostengünstige Sensoranordnung eingesetzt werden kann.

Daneben wird vorgeschlagen, daß Ultraschall in Richtung eines vom rechten Winkel zur Bewegungsrichtung des Werkstücks abweichenden Winkels ausgesandt wird. Durch diese Form der Aussendung von Ultraschall kann ein großer Raumbereich überwacht werden, wodurch in Form und Abmessungen besonders unterschiedliche Werkstücke in ihrer Position bestimmt werden können. Zudem kann hierdurch in Verbindung mit einer entsprechenden Auswerteeinheit eine räumliche Anordnung des Werkstücks ermittelt werden.

Vorteilhaft werden Bewegungsparameter des Werkstücks ermittelt. Hierdurch können Bearbeitungsschritte auf die Bewegung des Werkstücks optimal abgestimmt werden, so das beispielsweise kleine Werkstücke schneller bearbeitet werden können als große und somit Fertigungskosten eingespart werden können, indem eine Taktrate erhöht wird.

In einer weiteren Ausgestaltung wird vorgeschlagen, daß vom Werkstück reflektierter Ultraschall von einem Empfänger der Sensoranordnung empfangen wird. Diese Anordnung ermöglicht neben den vorgenannten Vorteilen, daß die Ultraschallsensoranordnung kompakt als eine Baueinheit ausgeführt wird. Besonders vorteilhaft wird der Ultraschallgeber auch zum Empfangen des reflektierter Signale verwendet. Bauteile und Kosten können eingespart werden. Insbesondere die Justierung der Ultraschall-Sensoranordnung kann hierdurch besonders einfach ausgeführt werden, da nur ein Bauteil auszurichten ist. So können zudem auch Rüstkosten für die Anlage reduziert werden.

Es wird ferner vorgeschlagen, daß das Werkstück an einem Schienensystem hängend durch die Bearbeitungs- / Fertigungsanlage transportiert wird. Das Werkstück ist hierbei von allen Seiten einer Bearbeitung zugänglich.

Vorteilhaft wird das Verfahren in einer Lackieranlage eingesetzt. Insbesondere durch die in einer Lackieranlage vorhandene Atmosphäre von Ärosolen und / oder gegebenenfalls auch Lösungsmitteln, usw. kann das erfindungsgemäße Verfahren im Vergleich zu optischen Meßverfahren kaum beeinflußt werden. Wartungsintervalle können verlängert und Standzeiten der Anlage können reduziert werden.

Dazu wird ferner vorgeschlagen, daß das Verfahren auf Heizkörper in der Lackieranlage angewendet wird. Damit kann die Lackieranlage vorteilhaft mit nur geringem oder sogar ohne zusätzlichen Rüstaufwand für die unterschiedlichsten Heizkörpervarianten verwendet werden. Es können zudem die Heizkörpervarianten vermischt verarbeitet werden, indem die Lackieranlage entsprechend des sich aktuell in der Anlage befindlichen Heizkörpers gesteuert wird. Ein besonders kostengünstiges Lackierverfahren mit hoher Qualität kann somit für eine Vielzahl von Heizkörpervarianten erreicht werden.

Insbesondere in Lackieranlagen ermöglicht das erfindungsgemäße Verfahren nicht nur die exakte Positionserkennung auch von Werkstücken, beispielsweise Heizkörpern mit geometrisch unterschiedlichen Oberflächen, also gewölbten, gerundete, ausgehöhlte oder ausgetragene Formen, sondern es wird auch möglich, die Oberflächenbeschichtung produktbezogen zu steuern, d. h. es können unterschiedliche Produkte in wahlloser Reihenfolge individuell beschichtet werden. Da das erfindungsgemäße Verfahren auch in die Lage versetzt, dynamische Bewegungen des Werkstücks zu erkennen, kann der Fertigungsvorgang darauf abgestimmt und somit hochpräzise durchgeführt werden.

Als Sensoranordnung für die Durchführung des erfindungsgemäßen Verfahrens wird vorgeschlagen, daß die Sensoranordnung einen Ultraschall-Sender / Empfänger aufweist. Die Sensoranordnung kann dazu so ausgebildet sein, daß ein Ultraschallgeber auf einer Seite der vorbeigeführten Werkstücke angeordnet ist und ein Ultraschallempfänger auf der gegenüberliegenden Seite. Daneben können der Ultraschallgeber und der Ultraschallempfänger auch gemeinsam auf einer Seite angeordnet sein. Besonders vorteilhaft wird in diesem Fall jedoch das Bauelement zum Ultraschall-Senden auch für den Ultraschallempfang verwendet. Um besonders große oder räumlich ungünstig gestaltete Räume zu erfassen, können zudem bekannte Verfahren der Nachrichtenverarbeitung eingesetzt werden, um beispielsweise eine räumliche Stellung oder Erstreckung eines Werkstücks zu ermitteln, oder durch Aussenden spezieller Ultraschallsignale eine besonders störsichere Messung zu erreichen. Zum Beispiel kann hiermit das empfangene Nutzsignal von Signalen weiterer Ultraschallquellen oder von weiteren unerwünscht störenden Reflexionen zur weiteren Verarbeitung getrennt werden.

Der Fachmann wird die Merkmale auch einzeln betrachten und zu weiteren sinnvollen Kombinationen zusammenfassen.

Es zeigen:
- Fig. 1: zeigt eine Seitenansicht eines Ausschnitts einer Lackieranlage,
- Fig. 2: zeigt eine Frontansicht der Lackieranlage aus Fig. 1,
- Fig. 3: zeigt eine Skizze einer Sensoranordnung zum Erfassen von Bewegungsparametern und
- Fig. 4: zeigt eine Skizze Sensoranordnung zum Erfassen von Bewegungsparametern, wobei die Sensoranordnung als Ultraschallgeber und -Empfänger verwendet wird.

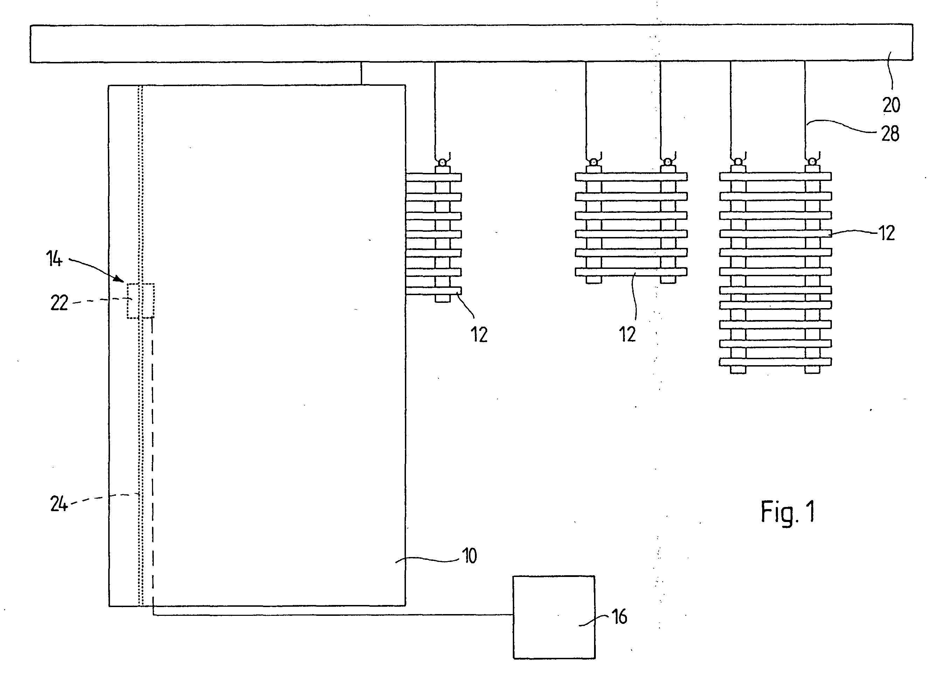

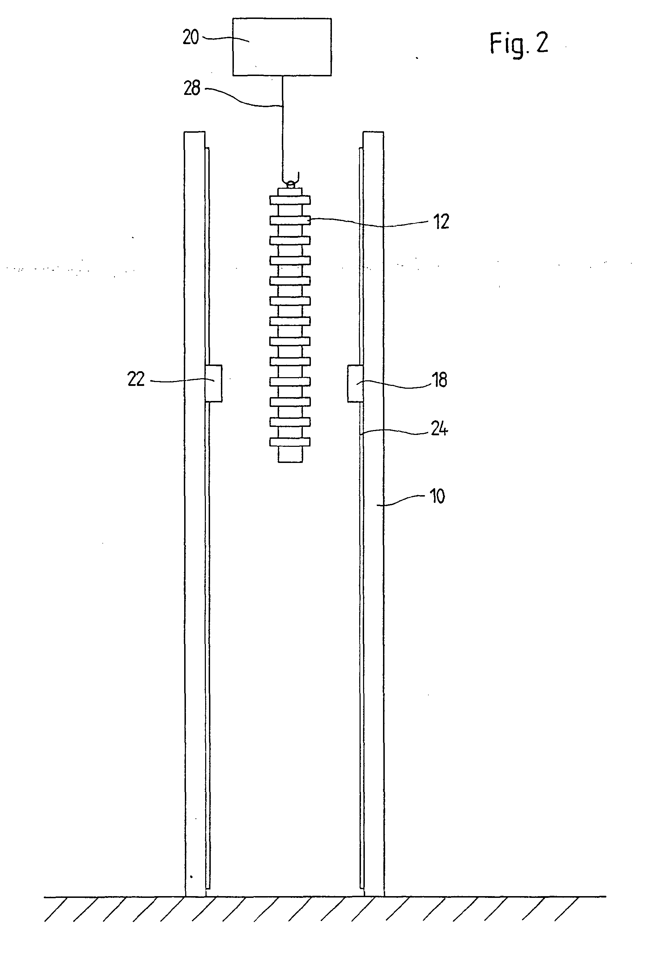

Im wesentlichen gleichbleibende Bauteile sind grundsätzlich mit den gleichen Bezugszeichen bezeichnet. Fig. 1 zeigt eine Lackieranlage 10, in der unter Anwendung des erfindungsgemäßen Verfahrens Heizkörper 12 lackiert werden. Dabei wird zum Erfassen des Erreichens einer Position eines im wesentlichen automatisch in einer Bearbeitungs- / Fertigungsanlage 10 transportierten Heizkörpers 12 eine Ultraschall-Sensoranordnung als Sensoranordnung 14 verwendet. Die Sensoranordnung 14 weist einen Ultraschallgeber 22 und einen Ultraschallempfänger 18 auf (Fig. 2). Ferner ist die Sensoranordnung 14 mit einem Rechner 16 verbunden, an den die Signale übermittelt werden. Um die Position mit hoher Genauigkeit zu bestimmen, wird die Sensoranordnung 14 über den Rechner 16 höhenverstellbar betrieben. Dazu sind der Ultraschallgeber 22 und der Ultraschallempfänger 18 über ein Antriebssystem 24 gemeinsam in der Höhe verstellbar (Fig. 2). Mittels zweier Halteelemente 28 ist jeweils ein Heizkörper 12 an einem Schienensystem 20 aufgehängt, an welchen der Heizkörper durch die Anlage transportiert wird.

Der Ultraschallempfänger 18 überträgt Signale an den Rechner 16, der daraus das Erreichen der Position ermittelt und den Lackiervorgang bei Erreichen der vorgegeben Position startet. Nach Abschluß des Lackiervorgangs wird die Anlage 10 in einen Wartezustand geschaltet. Sobald der nächste Heizkörper die vorgegebene Position erreicht, wird der Lackiervorgang durch den Rechner 16 erneut gestartet.

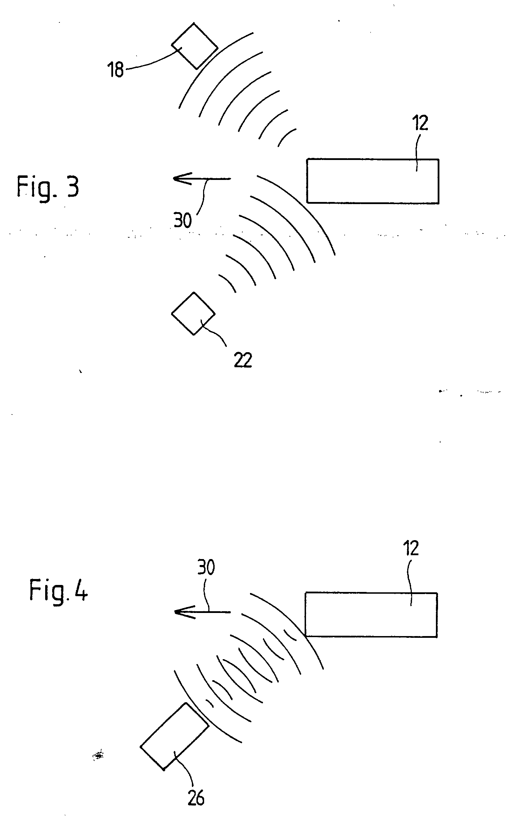

In Fig. 3 zeigt eine Skizze einer Sensoranordnung, bei der Ultraschall in Richtung eines vom rechten Winkel zur Bewegungsrichtung 30 des Werkstücks 12 abweichenden Winkels ausgesandt wird. In dieser Ausgestaltung wird im Gegensatz zum ersten Ausführungsbeispiel das vom Heizkörper 12 reflektierte Signal empfangen und ausgewertet. Ferner werden durch den Rechner 16 Bewegungsparameter wie Geschwindigkeit, Beschleunigung, usw. ermittelt. Die Bewegungsparameter können beispielsweise auch unter Berücksichtigung des Dopplereffekts vom Rechner 16 ermittelt werden.

Fig. 4 zeigt eine Sensoranordnung wie in Fig. 3, wobei hier der Ultraschallgeber und der Ultraschallempfänger in einer Baueinheit 26 zusammengefaßt sind. Idealerweise wird zum Erzeugen und Empfangen von Ultraschall das gleiche Bauelement verwendet.

In einer weiteren nicht näher dargestellten Ausgestaltung wird ein Ultraschallsender verwendet, der spezielle Ultraschallsignale aussendet, die über den Ultraschallempfänger empfangen und an den Rechner weitergeleitet werden. Durch geeignete numerische Verfahren bestimmt der Rechner aus diesen Signalen eine Ausrichtung eines Werkstücks. Hierdurch kann zum Beispiel ein nicht korrekt aufgehängtes Werkstück erkannt und die Anlage gestoppt werden, bevor eine Beschädigung erfolgt.

### Bezugszeichenliste

- 10: Fertigungsanlage
- 12: Werkstück
- 14: Sensoranordnung
- 16: Rechner
- 18: Empfänger
- 20: Schienensystem
- 22: Sender
- 24: Antriebssystem
- 26: Integrierte Ultraschallgeber und Empfangsanordnung
- 28: Halteelemente
- 30: Richtung

## Patentansprüche

1. Verfahren zum Erfassen eines im wesentlichen automatisch in einer Bearbeitungs- / Fertigungsanlage (10) transportierten Werkstücks (12) mittels einer Sensoranordnung (14),
**dadurch gekennzeichnet,**
**daß** als Sensoranordnung (14) eine Ultraschall-Sensoranordnung verwendet wird.

2. Verfahren nach Anspruch 1, **dadurch gekennzeichnet, daß** Signale der Sensoranordnung (14) an einen Rechner (16) übermittelt werden.

3. Verfahren nach Anspruch 1 oder 2, **dadurch gekennzeichnet, daß** die Sensoranordnung (14) höheneinstellbar betrieben wird.

4. Verfahren nach einem der vorhergehenden Ansprüche, **dadurch gekennzeichnet, daß** Ultraschall in Richtung eines vom rechten Winkel zur Bewegungsrichtung des Werkstücks abweichenden Winkels ausgesandt wird.

5. Verfahren nach einem der vorhergehenden Ansprüche, **dadurch gekennzeichnet, daß** Bewegungsparameter des Werkstücks (12) ermittelt werden.

6. Verfahren nach einem der vorhergehenden Ansprüche, **dadurch gekennzeichnet, daß** vom Werkstück (12) reflektierter Ultraschall von einem Empfänger (18) der Sensoranordnung (14) empfangen wird.

7. Verfahren nach einem der vorhergehenden Ansprüche, **dadurch gekennzeichnet, daß** das Werkstück (12) an einem Schienensystem (20) hängend durch die Bearbeitungs- / Fertigungsanlage (10) transportiert wird.

8. Verfahren nach einem der vorhergehenden Ansprüche, **dadurch gekennzeichnet, daß** das Verfahren in einer Lackieranlage (10) eingesetzt wird.

9. Verfahren nach einem der vorhergehenden Ansprüche, **dadurch gekennzeichnet, daß** das Verfahren auf Heizkörper (12) in der Lackieranlage (10) angewendet wird.

10. Verfahren nach einem der vorhergehenden Ansprüche, **dadurch gekennzeichnet, daß** von der Sensoranordnung gelieferte Signale zur Erfassung dynamischer Werkstückbewegungen ausgewertet werden.

11. Verfahren nach einem der vorhergehenden Ansprüche, **dadurch gekennzeichnet, daß** die von der Sensoranlage gelieferten Signale zur Werkstückidentifizierung verwendet werden.

12. Vorrichtung zum Erfassen des Erreichens einer Position eines im wesentlichen automatisch in einer Bearbeitungs- / Fertigungsanlage (10) transportierten Werkstücks (12) mittels einer Sensoranordnung (14), **dadurch gekennzeichnet, daß** die Sensoranordnung (14) einen Ultraschall-Sender / Empfänger (18, 22) aufweist.
